# EUROPEAN PATENT APPLICATION

(11) **EP 3 533 539 A1**
(43) Date of publication of application: **04.09.2019**
(21) Application number: 18159318.7
(22) Date of filing: 28.02.2018
(51) Int. Cl.: B22F 3/105, C22C 33/02, C22C 38/52, B33Y 80/00, B33Y 10/00, B33Y 30/00

(54) **IMPROVEMENTS RELATING TO THE MANUFACTURE OF METAL ALLOY COMPONENTS**

(71) Applicant: Siemens Aktiengesellschaft, 80333 München (DE)
(72) Inventor: Mathai, Manu, Lincoln, LN5 7FD (GB)
(74) Representative: Maier, Daniel Oliver

(57) **Abstract**

A component comprising at least two different iron-based compositions in different regions of the component, including a first iron-based composition comprising 11.0-15.0 wt% chromium; 1.0-4.0 wt% nickel; 5.0-8.0 wt% cobalt; and iron. The first iron-based composition may also comprise 2.0-6.0 wt% copper, 4.0-7.0 wt% molybdenum and one or more of niobium, manganese, silicon, and phosphorous. The component may be a compressor aerofoil for a gas turbine. A selective laser melting method for forming a component and an apparatus for carrying out said method are also provided. The composition of the component and/or the method and apparatus may provide a reduction in delta ferrite formation in the component and an improvement in mechanical properties of the component, particularly in relation to compressor aerofoils. The method and apparatus may also be suitable for the production of turbine aerofoils which operate at the hot end (turbine side) of a gas turbine.

## Description

The present disclosure relates to components manufactured from metal alloys, the components comprising different metal alloy compositions in different regions of the component, which may provide improved pitting corrosion resistance and mechanical properties. The present disclosure also relates to methods of providing said components and to apparatus for carrying out said methods.

In particular the disclosure is concerned with compressor aerofoils formed from different iron-based compositions which are tailored to meet specific requirements in specific regions of the component and to reduce delta ferrite formation.

### Background

Generally, pitting corrosion (also known as pitting) is a type of localized corrosion of a metal that results in the formation of pits (small holes) in the metal. A cause of pitting corrosion is depassivation of a typically small surface area of the metal, which becomes anodic while the remainder of the surface becomes cathodic, thereby resulting localised galvanic corrosion. This corrosion penetrates the surface of metal. Pitting corrosion typically occurs in alloys, for example stainless steels, nickel alloys and aluminium alloys, that are normally protected by passivation surface layers, for example oxide layers, in environments that contain aggressive species, for example chloride ions, are at elevated temperatures, have increased concentrations of oxidants and/or are acidic.

Generally, gas turbine components, for example rotating and stationary compressor blades (also known as aerofoils or airfoils), require at least a combination of high strength, toughness and fatigue resistance to withstand static and/or dynamic stresses, for example centripetal stresses and/or stress cycling, at operational temperatures. Stainless steels, for example ASTM P91, ASTM P92, GTD 450, SAE 400 series, SAE 600 series such as SAE type 630 (also known as 17-4 or 17-4PH; also known as UNS 17400), may meet these requirements. However, such components may also be susceptible to pitting corrosion, which may initiate fatigue cracking during high cycle fatigue, for example. Growth of such fatigue cracks may result in catastrophic failure of the components. In addition, such components may be susceptible to water droplet erosion (WDE) which may be caused by impingement of liquid water droplets sprayed on the components to provide cooling. WDE may also contribute towards fatigue of the components and ultimately failure. Leading edges of compressor blades may be particularly susceptible to pitting corrosion and/or WDE.

Conventional approaches to improving pitting corrosion resistance and/or WDE include providing ceramic coatings, modifying component design to reduce stresses and developing new alloys. However, such ceramic coatings may be susceptible to delamination. Modifying the component design to reduce stresses does not affect susceptibility to pitting corrosion and/or WDE. New alloy development may be costly, typically requiring new manufacturing processes and/or new qualification of components formed therefrom.

One steel material currently used to manufacture compressor aerofoils is 17-4PH which is a precipitation hardened martensitic stainless steel. The composition of 17-4PH is as follows:
15.0-17.5 wt% chromium;
3.0-5.0 wt% nickel;
3.0-5.0 wt% copper,
up to 0.5 wt% molybdenum;
up to 0.45 wt% niobium;
up to 1.0 wt% manganese;
up to 1.0 wt% silicon;
up to 0.03 wt% phosphorous; and
iron to balance.

17-4PH is prone to delta ferrite formation predominantly in the longitudinal direction of the aerofoil which results in anisotropy in mechanical properties and a significant drop in the mechanical properties in the longitudinal direction. This drop in mechanical properties is believed to have caused numerous tip failures in compressor aerofoils manufactured from 17-4PH. The issues with delta ferrite formation and various corrosion issues due to pitting corrosion are observed in such compressor aerofoils.

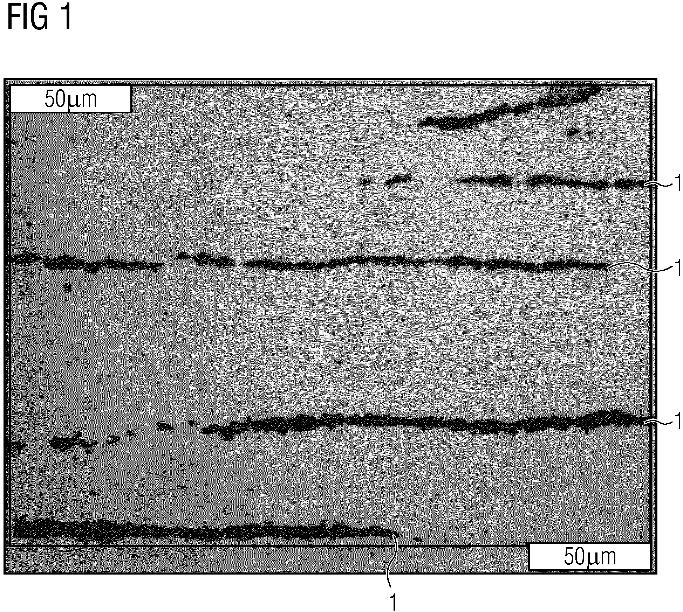

Figure 1 shows the microstructure of a section taken in the longitudinal direction in a compressor aerofoil manufactured from 17-4PH. This image was produced after etching the section with 20% NaOH and processing the image to highlight the delta ferrite streaks (1). Figure 1 shows that the delta ferrite streaks are clearly visible in the sections taken in the longitudinal direction i.e. in the direction of deformation expected in use. The delta ferrite is typically seen to be aligned in the direction of working during manufacture of the compressor aerofoils from a rolled bar. It is evident based on the microstructure shown in Figure 1, that the delta-ferrite is elongated in the martensite matrix of the aerofoil. Based on analysis of the image of Figure 1, the percentage of delta ferrite at various locations was between 5.5 and 6 % which is above a desired level of free ferrite for maintaining acceptable mechanical performance. Although a small amount of delta ferrite can be beneficial for increasing tensile properties and resistance to stress-corrosion cracking, the levels of delta ferrite observed in Figure 1 are believed to significantly reduce toughness during use of the aerofoil and therefore risk failures of the aerofoil.

Hence, there is a need to improve pitting corrosion and/or reduce delta ferrite formation in said components.

### Selective laser melting

One alternative method for manufacturing a metal alloy component is to use a selective laser melting process (SLM), also known as additive manufacturing. In a typical SLM process, a component is formed in layers by applying a layer of powder, melting (or "sintering") said powder layer using a laser beam, moving the component being formed downwards, applying a new layer of powder and repeating these operations until the formation of the component is complete. The interface between incrementally processed layers is generally prone to defects and questionable mechanical properties. Wherein the component being formed comprises different metal alloy compositions in different regions of the component, the use of known SLM processes has involved severe drawbacks such as high residual stress formation at the interface of the different regions and the long processing time required due to the complexity of tracking the convex and concave side of certain components, for example compressor aerofoils.

### Summary

It is one aim of the present invention, amongst others, to provide a component and a method of forming a component that addresses at least one disadvantage of the prior art, whether identified here or elsewhere, or to provide an alternative to existing components and methods of forming said components.

For instance it may be an aim of the present invention to provide a component, such as a compressor aerofoil, having a leading edge with improved resistance to pitting corrosion compared to prior art components.

It may be an alternative or additional aim of the present invention to provide a component, such as a compressor aerofoil, having a leading edge with improved resistance to damage from foreign objects compared to prior art components.

It may be an alternative or additional aim of the present invention to provide a component, such as a compressor aerofoil, having a reduced amount of delta ferrite compared to prior art components.

It may be an alternative or additional aim of the present invention to provide a method of forming a component, such as a compressor aerofoil, with a reduced amount of material wastage compared to prior art methods.

It may be an alternative or additional aim of the present invention to provide a method of forming a component, such as a compressor aerofoil, without requiring a joining process for forming a bond between regions of the component having different metal alloy compositions.

It may be an alternative or additional aim of the present invention to provide an improved method of forming a component by selective laser melting which may have a shorter processing time than known SLM methods and may reduce or suitably avoid the formation of residual stress at the interface of the different regions of the component.

According to the present disclosure there is provided a component, a method of forming a component and an apparatus as set forth in the appended claims. Other features of the invention will be apparent from the dependent claims, and the description which follows.

According to a first aspect of the present invention, there is provided a component comprising a first iron-based composition in at least a first region of the component, the first iron-based composition comprising:
11.0-15.0 wt% chromium;
1.0-4.0 wt% nickel;
5.0-8.0 wt% cobalt; and
iron.

The iron-based composition is suitably a metal alloy comprising mainly iron with the specified alloying elements and optionally other alloying elements. The iron-based composition is suitably a steel.

The inventor has found that the addition of the specified alloying elements to the first iron-based composition may reduce delta ferrite formation in the component compared to a similar component formed of an iron-based composition of the prior art, such as 17-4PH, and therefore may improve the mechanical properties of the component.

The inventor has also found that the addition of the specified alloying elements to the first iron-based composition may also improve the pitting corrosion resistance of the first region of the component compared to a similar region of a component formed of an iron-based composition of the prior art, such as 17-4PH. As nickel and cobalt are austenite formers, the amount of nickel is lower in the first iron-based composition compared to 17-4PH to accommodate the cobalt in the first iron-based composition without increasing the austenite forming potential of the first iron-based composition whilst increasing pitting corrosion resistance.

The inventor has also found that the addition of the specified alloying elements to the first iron-based composition may also improve the resistance of the first region of the component to impacts of foreign objects compared to a similar region of a component formed of an iron-based composition of the prior art, such as 17-4PH. This may be particularly useful when the first region is a region of the component exposed to the outside environment in use, such as a leading edge region of a compressor aerofoil. This improvement may be at least partially due to the cobalt content of the first iron-based composition.

Suitably the first iron-based composition comprises 2.0-6.0 wt% copper, suitably 3.0-5.0 wt% copper.

Suitably the first iron-based composition comprises 4.0-7.0 wt% molybdenum. Suitably the first iron-based composition comprises 5.0-6.0 wt% molybdenum, suitably 5.5-6.0 wt%.

Suitably the first iron-based composition comprises:
11.0-15.0 wt% chromium;
1.0-4.0 wt% nickel;
5.0-8.0 wt% cobalt;
2.0-6.0 wt% copper;
4.0-7.0 wt% molybdenum; and
iron.

Suitably the first iron-based composition comprises:
12.0-14.0 wt% chromium;
2.0-3.0 wt% nickel;
6.0-7.0 wt% cobalt;
3.0-5.0 wt% copper;
5.0-6.0 wt% molybdenum; and
iron.

The inventor has found that the addition of molybdenum to the first iron-based composition may further improve the pitting corrosion resistance compared to a similar component formed of an iron-based composition of the prior art, such as 17-4PH. As chromium and molybdenum are ferrite and martensite formers, the amount of chromium is lower in the first iron-based composition compared to 17-4PH, to accommodate the molybdenum in the first iron-based composition without increasing the ferrite and martensite forming potential of the first iron-based composition whilst increasing pitting corrosion resistance. Molybdenum is considered to have a more significant effect on the pitting corrosion resistance of the first iron-based composition than chromium.

Suitably the first iron-based composition comprises one or more of niobium, manganese, silicon, and phosphorous, suitably in an amount of up to 1.0 wt%.

Suitably the first iron-based composition comprises niobium, suitably in an amount of up to 0.3 wt%, suitably approximately 0.3 wt%, suitably 0.3 wt%.

The addition of small amounts of niobium may have the advantage of providing an increase in strength of the component, for example an increase in the resistance to foreign object impacts.

Suitably the phosphorous, when present, is present in the first iron-based composition in an amount of up to 0.03 wt%.

Suitably the first iron-based composition comprises:
12.0-14.0 wt% chromium;
2.0-3.0 wt% nickel;
6.0-7.0 wt% cobalt;
3.0-5.0 wt% copper,
5.0-6.0 wt% molybdenum;
up to 0.5 wt% niobium;
up to 1.0 wt% manganese;
up to 1.0 wt% silicon;
up to 0.03 wt% phosphorous; and
iron to balance.

Suitably the first iron-based composition comprises niobium in an amount of at least 0.2 wt%. Suitably the first iron-based composition comprises manganese in an amount of at least 0.2 wt%. Suitably the first iron-based composition comprises silicon in amount of at least 0.8 wt%. Suitably the first iron-based composition comprises phosphorous in an amount of at least 0.02 wt%.

Suitably the first iron-based composition comprises:
12.0-14.0 wt% chromium;
2.0-3.0 wt% nickel;
6.0-7.0 wt% cobalt;
3.0-5.0 wt% copper,
5.0-6.0 wt% molybdenum;
0.2-0.5 wt% niobium;
0.4-1.0 wt% manganese;
0.8-1.0 wt% silicon;
0.02-0.03 wt% phosphorous; and
iron to balance.

Suitably the first region of the component comprises an edge of the component. Suitably the edge of the component is exposed to the environment during use of the component and is therefore susceptible to pitting corrosion and to impacts from foreign objects. As discussed above, the first iron-based composition of the component of this first aspect provides the first region with particular properties which would be advantageous at such an edge region.

Suitably the component is an iron-based component. Suitably the component is entirely formed from iron-based compositions, the compositions being different in the first region of the component compared to other regions of the component. Suitably the component is formed of a steel.

Suitably the component is a compressor aerofoil and the first region is a leading edge region of the compressor aerofoil. Suitably the component is a compressor aerofoil, suitably intended to operate at a temperature of 350 °C.

Suitably the component of this first aspect comprises a second iron-based composition in a second region of the component, the second iron-based composition comprising:
14.0-18.0 wt% chromium;
4.0-6.0 wt% nickel;
0.5-2.0 wt% cobalt;
optionally one or more of manganese, silicon, and phosphorous; and
iron.

Suitably the second iron-based composition comprises 2.0-6.0 wt% copper, suitably 3.0-5.0 wt% copper.

Suitably the second iron-based composition does not comprise molybdenum. Suitably the second iron-based composition does not comprise niobium. Suitably the second iron-based composition does not comprise molybdenum or niobium.

Suitably the second iron-based composition comprises a lower amount of cobalt compared to the first iron-based composition. Suitably the second iron-based composition comprises a higher amount of nickel compared to the first iron-based composition. Therefore the second iron-based composition is different to the first iron-based composition.

In embodiments wherein the component is a compressor aerofoil and the first region is a leading edge of the compressor aerofoil, the second region is suitably a trailing edge of the compressor aerofoil. The trailing edge of such a compressor aerofoil does not require the same level of pitting corrosion resistance and strength to resist foreign object impacts as required of the leading edge of the compressor aerofoil. Therefore, the second iron-based composition may advantageously comprise less of the expensive cobalt alloying element to save on the overall cost of manufacturing the component.

Suitably the second iron-based composition comprises:
14.0-18.0 wt% chromium;
2.0-6.0 wt% nickel;
0.5-2.0 wt% cobalt;
2.0-6.0 wt% copper;
optionally one or more of manganese, silicon, and phosphorous; and
iron.

Suitably the second iron-based composition comprises:
14.0-18.0 wt% chromium;
2.0-6.0 wt% nickel;
0.5-2.0 wt% cobalt;
2.0-6.0 wt% copper;
up to 1.0 wt% manganese;
up to 1.0 wt% silicon;
up to 0.03 wt% phosphorous; and
iron to balance.

Suitably the second iron-based composition comprises:
14.0-18.0 wt% chromium;
2.0-6.0 wt% nickel;
0.5-2.0 wt% cobalt;
2.0-6.0 wt% copper;
0.4-1.0 wt% manganese;
0.8-1.0 wt% silicon;
0.02-0.03 wt% phosphorous; and
iron to balance.

Suitably the second iron-based composition comprises:
15.0-17.0 wt% chromium;
3.0-5.0 wt% nickel;
1.0-1.5 wt% cobalt;
3.0-5.0 wt% copper;
up to 1.0 wt% manganese;
up to 1.0 wt% silicon;
up to 0.03 wt% phosphorous; and
iron to balance.

Suitably the second iron-based composition comprises:
15.0-17.0 wt% chromium;
3.0-5.0 wt% nickel;
1.0-1.5 wt% cobalt;
3.0-5.0 wt% copper;
0.4-1.0 wt% manganese;
0.8-1.0 wt% silicon;
0.02-0.03 wt% phosphorous; and
iron to balance.

Suitably the first and second regions of the component are shaped to interlock with adjacent regions of the component. The first and second regions being shaped in this way may improve the mechanical properties of the join between the first and second regions and the adjacent regions and therefore improve the mechanical properties of the component.

Suitably the component of this first aspect comprises a third iron-based composition in a third region of the component, the third iron-based composition comprising:
14.0-18.0 wt% chromium;
2.0-4.0 wt% nickel;
1.0-4.0 wt% cobalt;
optionally one or more of niobium, manganese, silicon, and phosphorous; and
iron.

Suitably the third iron-based composition comprises 2.0-6.0 wt% copper, suitably 3.0-5.0 wt% copper.

Suitably the third iron-based composition does not comprise molybdenum.

Suitably the third iron-based composition comprises a lower amount of cobalt compared to the first iron-based composition and a higher amount of cobalt than the second iron-based composition. Suitably the third iron-based composition comprises a higher amount of nickel compared to the first iron-based composition and a lower amount of nickel compared to the second iron-based composition. Therefore the third iron-based composition is different to the first iron-based composition and the second iron-based composition. The variation in these alloying elements described above provides a gradual transition in chemical composition which may advantageously provide a gradual transition in mechanical properties from the first iron-based composition through the third iron-based composition to the second iron-based composition. Such a gradual transition may provide an improved bond between the different regions of the component which avoids a mechanical weakness seen in prior art components formed from more significantly different iron-based compositions, for example by joining different regions of a component having different compositions together by brazing.

Suitably the third region of the component is arranged between and in contact with the first region and the second region of the component.

In embodiments wherein the component is a compressor aerofoil and the first region is a leading edge of the compressor aerofoil and the second region is a trailing edge of the compressor aerofoil, the third region is suitably an intermediate region arranged between and in contact with the leading edge and the trailing edge regions. The intermediate region of such a compressor aerofoil does not require the same level of pitting corrosion resistance and strength to resist foreign object impacts as required of the leading edge of the compressor aerofoil. Therefore, the third iron-based composition may advantageously comprise less of the expensive cobalt alloying element to save on the overall cost of manufacturing the component.

Suitably the third iron-based composition comprises:
14.0-18.0 wt% chromium;
2.0-4.0 wt% nickel;
1.0-4.0 wt% cobalt;
2.0-6.0 wt% copper;
optionally one or more of niobium, manganese, silicon, and phosphorous; and
iron.

Suitably the third iron-based composition comprises:
14.0-18.0 wt% chromium;
2.0-4.0 wt% nickel;
1.0-4.0 wt% cobalt;
2.0-6.0 wt% copper;
up to 0.2 wt% niobium;
up to 1.0 wt% manganese;
up to 1.0 wt% silicon;
up to 0.03 wt% phosphorous; and
iron to balance.

Suitably the third iron-based composition comprises:
14.0-18.0 wt% chromium;
2.0-4.0 wt% nickel;
1.0-4.0 wt% cobalt;
2.0-6.0 wt% copper;
0.1-0.2 wt% niobium;
0.4-1.0 wt% manganese;
0.8-1.0 wt% silicon;
0.02-0.03 wt% phosphorous; and
iron to balance.

Suitably the third iron-based composition comprises:
15.0-17.0 wt% chromium;
2.5-3.5 wt% nickel;
2.0-3.0 wt% cobalt;
3.0-5.0 wt% copper;
up to 0.2 wt% niobium;
up to 1.0 wt% manganese;
up to 1.0 wt% silicon;
up to 0.03 wt% phosphorous; and
iron to balance.

Suitably the third iron-based composition comprises:
15.0-17.0 wt% chromium;
2.5-3.5 wt% nickel;
2.0-3.0 wt% cobalt;
3.0-5.0 wt% copper;
0.1-0.2 wt% niobium;
0.4-1.0 wt% manganese;
0.8-1.0 wt% silicon;
0.02-0.03 wt% phosphorous; and
iron to balance.

Suitably the first, second and third regions of the component are shaped so that the third region interlocks with the first and second regions of the component.

According to a second aspect of the present invention, there is provided a component comprising:
a first iron-based composition in at least a first region of the component, the first iron-based composition comprising chromium, nickel, cobalt and iron;
a second iron-based composition in at least a second region of the component, the second iron-based composition comprising chromium, nickel, cobalt and iron;
wherein the second iron-based composition comprises a lower amount of cobalt than the first iron-based composition and wherein the second iron-based composition comprises a higher amount of nickel than the first iron-based composition.

The component, first iron-based composition and second iron-based composition of this second aspect may have any of the suitable features and advantages described in relation to the first aspect.

### A method of forming a component by selective laser melting

According to the third aspect of the present invention, there is provided a method of forming a component on a build platform, the component comprising a first metal alloy composition in at least a first region of the component and a second metal alloy composition in at least a second region of the component, the method comprising the steps of:
a) forming a layer of the component by depositing a metal alloy powder onto the build platform and irradiating the metal alloy powder using at least two laser beams to melt at least a part of the metal alloy powder, wherein the at least two laser beams are arranged to irradiate opposing sides of the layer of the component;
b) allowing the layer formed in step a) to at least partially solidify;
c) repeating steps a) and b) on the previously formed layer of the component until formation of the component is complete;
d) removing the component from the build platform.

Suitably steps a)-d) are carried in the order of step a) followed by step b) followed by c) followed by step d).

Suitably the method of this third aspect is a selective laser melting (SLM) method. Suitably the build platform moves after each layer of the component has been formed to allow the next layer of the component to be formed, suitably by moving vertically downwards.

In step a), the part of the metal alloy powder melted by irradiation with the at least two laser beams are the parts which correspond to the layer of the component being formed. Step a) may leave some parts of the metal alloy powder un-irradiated and un-melted. Such parts do not correspond to the layer of the component and require removal from the build platform and the component at some stage of the process of forming the component.

Using the method of this third aspect to form the component may advantageously allow the manufacture of such a component with a reduced amount of material wastage compared to prior art methods. The method may also advantageously provide a component, such as a compressor aerofoil, formed from different metal alloy compositions in different regions of the component without requiring a joining process for forming a bond between said regions. Such a component may therefore have improved mechanical properties compared to a similar component formed using a joining process.

Furthermore, the use of at least two laser beams in the method of this third aspect to form the component may advantageously allow a component to be manufactured in a shorter time than a similar component made using an SLM process of the prior art. For example, such a known SLM process may involve a long processing time due to the sequential deposition, irradiation and solidification steps. Using more than one laser beam for irradiating the component can provide a simultaneous irradiation and solidification of at least two regions of the component.

Using a known SLM process for manufacturing a typical compressor aerofoil may involve a long processing time due to the need for the laser beam to accurately track the convex and concave sides of the compressor aerofoil.

Step a) involves irradiating opposing sides of the layer of the component. Suitably step a) involves irradiating opposing sides of the layer of the component simultaneously. In embodiments wherein the component is a compressor aerofoil having a convex side and a concave side, the at least two laser beams may allow the convex and concave sides to be irradiated simultaneously. Therefore the processing time can be reduced due to the at least two laser beams being operable to irradiate the convex and concave profiles more accurately and more quickly than a single laser beam. The at least two laser beams may also incorporate multi-axis movements relative to the working surface so that the laser beams can more accurately follow more complicated aerofoil profiles which are highly non-linear. It is also possible to alter the shape and intensity of the laser beam to account for the non-linear dimensions of the powder layer being processed. In the typical state of the art it is common to use laser beams that are roughly circular in shape, however the laser beams can be altered so that they could be rectangular or approximately rectangular shapes. Having multiple laser beam shapes would be beneficial to account for non-linear dimensions of the powder layers. Typically if a single laser beam is used, when a convex side of an aerofoil has been irradiated first followed by irradiation of a concave side of the aerofoil, when the laser beam irradiates the concave side there is a high probability that lateral distortion induced due to heating the convex side would result in the laser beam not tracking the concave side accurately. This can therefore lead to distortion of the component and faults or inefficiencies in the manufacturing process. These may be avoided in the method of this third aspect.

Suitably in step a) the layer of metal alloy powder is irradiated by the at least two laser beams through a masking system. Suitably the masking system is moveable relative to the build platform. Moving the masking system relative to the build platform suitably changes the location, number and/or intensity of the at least two laser beams irradiating the metal alloy powder in step a).

Suitably step d) is followed by a step e) of heat treating the component.

The heat treating step e) may involve heating the component at a temperature greater than 1,000 °C for at least 2 hours. Suitably step e) involves heating the component in a solution at a temperature of at least 800 °C, suitably followed by quenching, suitably in a salt bath. Suitably step e) involves ageing the component at a temperature of between 400 and 600 °C for at least 1 hour. Suitably step e) involves each of the heating and ageing steps discussed above.

In some embodiments step a) involves the steps:
i) depositing a first metal alloy powder in a first region of the layer of the component;
ii) depositing a second metal alloy powder in a second region of the layer of the component;
iii) irradiating the first metal alloy powder and the second metal alloy powder deposited in steps i) and ii) using the at least two laser beams, to melt at least a part of the first metal alloy powder and the second metal alloy powder;
wherein the first metal alloy powder forms the first metal alloy composition in the first region of the component and the second metal alloy powder forms the second metal alloy composition in the second region of the component.

Suitably the first region of the layer of the component is a layer of the first region of the component (i.e. the finished component) and the second region of the layer of the component is a layer of the second region of the component. Therefore the first regions of each layer of the component together provide the first region of the component (i.e. the finished component) and the second regions of each layer of the component together provide the second region of the component.

Suitably, the method of this third aspect comprises a step b1) of removing at least a part of the metal alloy powder which has not been irradiated in step a) from the build platform. Suitably step b1) if carried out after step b) and before step c), suitably after each repetition of step b) and therefore before each repetition of step a). Suitably step b1) involves collecting the metal alloy powder for re-use in the method of this third aspect.

Suitably the build platform comprises a powder removal system for removing metal alloy powder from the build platform. Suitably the powder removal system is arranged to remove powder from the build platform through holes in the build platform, suitably by applying a vacuum to said holes. The powder removal system suitably comprises at least one container into which the powder is collected and from which the powder may by recycled or reused, suitably re-used during the same operation of forming a component which produced the powder.

Suitably the powder removal system is adapted to selectively remove and segregate the different metal alloy powders used in the method, suitably by arranging a group of holes in each region of the build platform which correspond to the different regions of the component being formed, each group of holes being arranged in communication with a separate container for the metal alloy powders.

Selective laser melting processes of the prior art typically use a roller or blade device to sweep thin layers of powder material across the build platform. However when multiple different metal alloy powders are introduced into the build platform there is a possibility that the use of said prior art methodology would result in cross contamination of the multiple different metal alloy powders which may prevent recycling and re-use of the different metal alloy powders. By having holes in the build platform corresponding to each material layer, un-sintered powder can be selectively removed into separate containers and then segregated for reuse at a sieving station. It is therefore possible to process multiple layers of powder in a sequential manner which would considerably reduce the residual stress formation as seen in the prior art.

The use of the first and second metal alloy powders in this manner suitably provide a variation in composition in the component along axis aligned with the build platform. For example, the method of this embodiment may produce a component, such as a compressor aerofoil, with a variation in composition in a transverse direction (i.e. a direction perpendicular to its longest dimension).

In some embodiments, the first and second regions of the component are shaped to interlock with adjacent regions of the component. In such embodiments, suitably the first metal alloy powder and the second metal alloy powder are deposited into said interlocking shape in the layers formed in step a). Suitably the first metal alloy powder and the second metal alloy powder are deposited onto the build platform (or previous layer of the component) so as to define interlocking male and female profiles which resist the first and second regions being pulled away from their adjacent regions in the finished component.

Forming the layer of the component in step a) may involve steps of depositing further metal alloy powders in further regions of the layer of the component to provide further metal alloy compositions in further regions of the component. For example, step a) may involve depositing a third metal alloy powder in a third region of the layer of the component and in step iii) irradiating the third metal alloy powder using the at least two laser beams, to melt at least a part of the third metal alloy powder. The third region of the component may be arranged between and in contact with the first and second regions. In such embodiments the first, second and third metal alloy powders are suitably deposited into said interlocking shape in the layers formed in steps a) and b), suitably to define interlocking male and female profiles which resist the first second and third regions being pulled away from their adjacent regions in the finished component.

In some embodiments, the method of this third aspect in step c) involves varying the composition of the metal alloy powder used to form the layers of the component to provide the first metal alloy composition in the first region of the component and the second metal alloy composition in the second region of the component. In such embodiments, the method suitably provides a variation in composition in the component perpendicular to the build platform. For example, the method of this embodiment may produce a component, such as a compressor aerofoil, with a variation in composition in a longitudinal direction (i.e. along its longest dimension).

In some embodiments of the method of this third aspect, the component is a compressor aerofoil and the first region of the component is a leading edge of the compressor aerofoil and the second region of the component is a trailing edge of the compressor aerofoil. In embodiments wherein a third region is present in the component, the third region is suitably an intermediate region located between and in contact with the first and second regions.

The method of this first aspect may be suitable for forming compressor aerofoils which operate at the cold end of a gas turbine, for example by using the metal alloy compositions described above to form a component of the first aspect. The method may also be suitable to form an aerofoil which operates at the hot end of a gas turbine (i.e. the turbine side of a gas turbine), referred to herein as a "turbine aerofoil". At the turbine side of a gas turbine, the leading edge of the turbine aerofoil is exposed to a higher temperature compared to the remainder of the aerofoil. The material used for forming the leading edge of the turbine aerofoil may have a temperature capability which is around 400 °C higher than the material which is used to form the trailing edge of the turbine aerofoil. For example, it may be possible to use high temperature capability gamma prime superalloys or higher refractory element content superalloys like NiAl alloys or ceramic matrix composites at the leading edge of the turbine aerofoil. The trailing edge of the turbine aerofoil could be formed of a lower temperature capability superalloy compared to the leading edge of the turbine aerofoil, using the same principles and method steps described above.

In such embodiments of the method of this third aspect, the component is a turbine aerofoil and the first region of the component is a leading edge of the turbine aerofoil and the second region of the component is a trailing edge of the turbine aerofoil. In embodiments wherein a third region is present in the component, the third region is suitably an intermediate region located between and in contact with the first and second regions.

In the method of this third aspect, the first metal alloy composition is suitably a first iron-based composition comprising:
11.0-15.0 wt% chromium;
1.0-4.0 wt% nickel;
5.0-8.0 wt% cobalt;
optionally one or more of niobium, manganese, silicon, and phosphorous; and
iron.

Suitably the second metal alloy composition is a second iron-based composition comprising:
14.0-18.0 wt% chromium;
4.0-6.0 wt% nickel;
0.5-2.0 wt% cobalt;
optionally one of more of manganese, silicon, and phosphorous; and
iron to balance.

The component and the first, second and third metal alloy compositions of this third aspect may have any of the suitable features and advantages described in relation to the component and the first, second and third iron-based compositions of the first aspect.

Suitably the method of this third aspect provides a method of forming a component according to the first or second aspects, wherein the first metal alloy composition is the first iron-based composition and the second metal alloy composition is the second iron-based composition.

The method of this third aspect may advantageously involve the at least two laser beams having the same energy and therefore irradiating the different regions of the component with the same laser energy, avoiding the need to use different laser energies. This is particularly applicable wherein the component has the first, second and third metal alloy compositions discussed above which are a gradual variation between said compositions.

According to a fourth aspect of the present invention, there is provided an apparatus for forming a metal alloy component, the apparatus comprising:
a build platform;
a depositing mechanism arranged to deposit metal alloy powder onto the build platform;
a laser system adapted to produce at least two laser beams.

Suitably the at least two laser beams are arranged to irradiate opposite sides of said metal alloy component on the build platform, suitably simultaneously.

Suitably the apparatus comprises a masking system arranged between the laser system and the build platform for selectively allowing or preventing said at least two laser beams from irradiating said metal alloy component on the build platform.

Suitably the depositing mechanism is adapted to provide varying metal alloy compositions. Suitably the depositing mechanism comprises at least two separate metal alloy powder storage chambers from which the depositing mechanism can selectively deposit a first metal alloy powder in a first region of said component and selectively deposit a second metal alloy powder in a second region of said component. Suitably the depositing mechanism comprises a third metal alloy powder storage chamber and can selectively deposit a third metal alloy powder in a third region of said component.

Suitably the apparatus of this fourth aspect is a selective laser melting (SLM) apparatus.

### Brief Description of the Drawings

Examples of the present disclosure will now be described with reference to the accompanying drawings, in which:
Figure 1 is a processed microscopic image of a longitudinal section of a prior art compressor aerofoil;
Figure 2 is a perspective view of a component according to the first aspect of the present invention; and
Figure 3 is a schematic of a selective laser melting apparatus according to the fourth aspect of the present invention being used to carry out a method according to the third aspect of the present invention.
Figure 4 is a schematic of the selective laser melting method of the third aspect being carried out to form component according to the first aspect which is a compressor aerofoil.

### Detailed Description

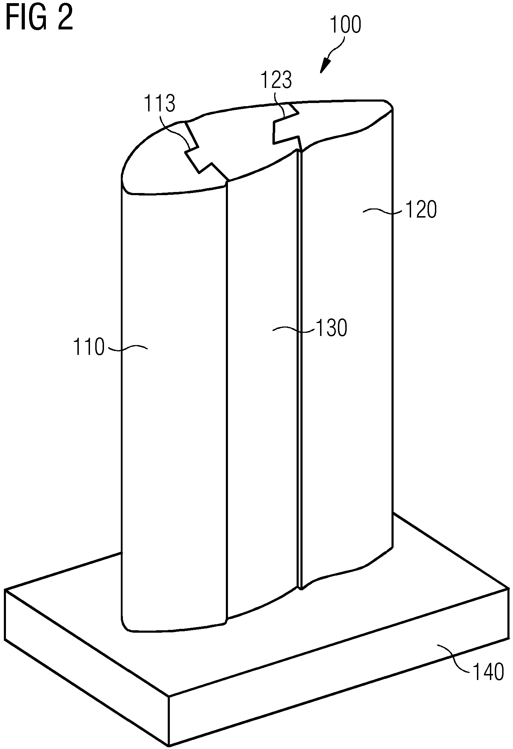

Figure 2 shows component (100) which is a compressor aerofoil formed of a steel with a different composition in different regions of the aerofoil (100). The component (100) comprises a first region (110) which is a leading edge region of the aerofoil, a second region (120) which is a trailing edge region of the aerofoil, a third region (130) which is an intermediate region of the aerofoil between the leading and trailing edge regions and a platform (140), which are common parts of such compressor aerofoils with known functions.

The leading edge region (110) of the aerofoil (100) has the following iron-based composition:
12.0-14.0 wt% chromium;
2.0-3.0 wt% nickel;
6.0-7.0 wt% cobalt;
3.0-5.0 wt% copper,
5.0-6.0 wt% molybdenum;
0.2-0.5 wt% niobium;
0.4-1.0 wt% manganese;
0.8-1.0 wt% silicon;
0.02-0.03 wt% phosphorous; and
iron to balance.

The trailing edge region (120) of the aerofoil (100) has the following iron-based composition:
15.0-17.0 wt% chromium;
3.0-5.0 wt% nickel;
1.0-1.5 wt% cobalt;
3.0-5.0 wt% copper;
0.4-1.0 wt% manganese;
0.8-1.0 wt% silicon;
0.02-0.03 wt% phosphorous; and
iron to balance.

The intermediate region (130) of the aerofoil (100) has the following iron-based composition:
15.0-17.0 wt% chromium;
2.5-3.5 wt% nickel;
2.0-3.0 wt% cobalt;
3.0-5.0 wt% copper;
0.1-0.2 wt% niobium;
0.4-1.0 wt% manganese;
0.8-1.0 wt% silicon;
0.02-0.03 wt% phosphorous; and
iron to balance.

The leading edge region (110) is adjacent to and in contact with the intermediate region (130) at a first interface (113) which runs through aerofoil (100) in a longitudinal direction. The trailing edge region (120) is adjacent to and in contact with the intermediate region (130) at a second interface (123) which runs through aerofoil (100) in a longitudinal direction. The first and second interfaces (113 and 123) are shaped to provide an interlocking of the respective regions. The first interface (113) defines a female profile in the leading edge region (110) and a complementary male profile in the intermediate region (130). The second interface (123) defines a female profile in the intermediate region (130) and a complementary male profile in the trailing edge region (120). Said male and female profiles interlock in the aerofoil (100) to provide resistance to the adjacent regions separating in a transverse direction (i.e. in a direction between the leading and trailing edges) to improve the mechanical integrity of the aerofoil (100) comprising the different regions having different compositions.

The different compositions of the leading edge region (110), the intermediate region (130) and the trailing edge region (120) may provide the aerofoil (100) with improved mechanical properties compared to a similar aerofoil formed from a single known iron-based composition such as 17-4PH. The leading edge region (110) may provide the leading edge of the aerofoil (100) with improved pitting corrosion resistance and improved resistance to impacts from foreign objects which may strike the aerofoil (100) in use, due to the optimised amounts of alloying elements. The composition of the trailing edge region (120) may provide a cost saving due to the lower amount of expensive alloying elements such as cobalt compared to the leading edge region (110). The composition of the intermediate region (130) may provide a more gradual change in composition between the leading edge region (110) and the trailing edge region (120) than may otherwise be possible if only two different iron-based compositions were used to form the aerofoil (100). This gradual change in composition may avoid the negative effects on mechanical properties observed with prior art components which have used significantly different compositions in adjacent regions of such components. The compositions of each of the leading edge region (110), the intermediate region (130) and the trailing edge region (120) may provide a reduced tendency to form delta ferrite structures in the aerofoil (100) compared with prior art aerofoils, due to the optimised amounts of alloying elements in each iron-based composition, in particular the amounts of nickel, cobalt and copper. Suitably the aerofoil (100) is essentially free of delta ferrite.

### Formation of the component by selective laser melting

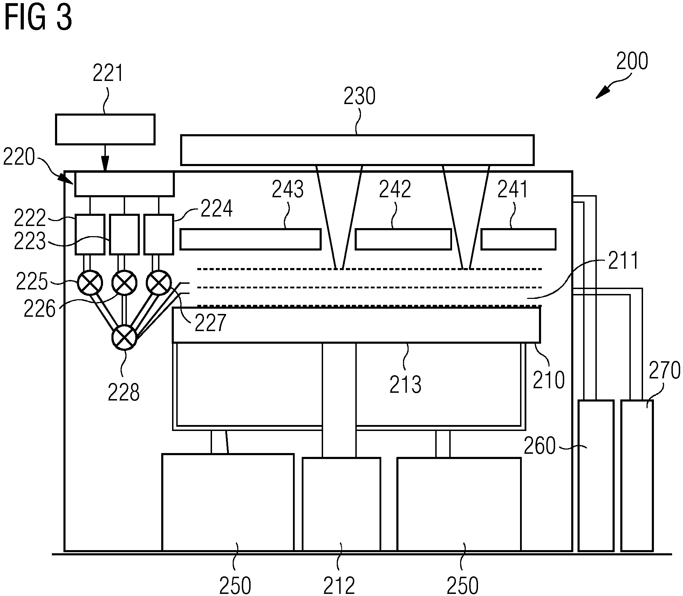

Figure 3 shows an apparatus (200) for forming a component such as a compressor aerofoil (100) by selective laser melting. The apparatus (200) comprises a build platform (210), a depositing mechanism (220), a laser system (230), a masking system (240), a powder removal system (250), an inert gas supply (260) and a vacuum source (270). The build platform (210) has an upper surface onto which metal alloy powder is deposited in use to form a powder bed (211). The build platform (210) is powered by motor (212) which raises and lowers the build platform (210) in use. The lower surface (213) of the build platform (210) comprises holes through which powder may be removed from the powder bed (211) by a vacuum.

The depositing mechanism (220) comprises a control module (221) for controlling the dispensing of different metal alloy powders from three powder storage chambers (222, 223 and 224) through metering valves (225, 226 and 227) and through a main valve (228). The depositing mechanism is arranged to deposit metal alloy powders onto the build platform (210), during a component manufacture.

The laser system (230) is configured to supply laser beams to the powder bed (211) on the build platform (210) to selectively melt the powder bed (211) is specific regions. The laser system comprises a suitably laser source, for example a CO₂ or a ytterbium laser source. The laser system (230) comprises four beam delivery fibres which emit four divergent laser beams. The laser system also comprises a collimating lens and a focussing lens. The four laser beams pass through a collimating lens and emerge out as collimated laser beams in phase with each other. The collimated laser beams then pass through a spherically shaped focussing lens which focuses the laser beams onto the powder bed (211).

The laser system (230) is configured to be scanned across the powder bed (211) to selectively melt and solidify selected regions of the powder bed (211) to form specific regions of the component.

The masking system (240) comprises masking elements (241, 242 and 243) which prevent laser beams from the laser system passing to the powder bed (211). The masking system (240) comprises gaps between the masking elements (241, 242 and 243) through which laser beams can pass to the powder bed (211). The masking elements (241, 242 and 243) are movable relative to the powder bed (and therefore relative to the component being formed) in order to irradiate different regions of the powder bed with the laser beams. The masking elements include portions which are optically transmissive to the laser energy beam. These optically transmissive portions are normally in the form of transparent or translucent materials in the masking element that transmit the laser energy beam either partially or fully. The required physical properties of the transparent materials include materials that transmit photons having the same wavelength as the laser energy beam which is normally ytterbium or CO₂ type based lasers. In certain high temperature applications it may also be required that the transparent materials have a melting temperature higher that the melting temperature of the alloy being selectively laser melted. The transparent materials having these properties are known in the state of the art and include borosilicate glasses, silicas, alumina materials, phosphate glasses and zinc selenide materials.

The masking elements may be additionally mounted on support members which are further connected to mechanisms that control the movements of the masking elements. The movement of the masking elements may be relative to one another or with respect to the laser energy beam. The movement of the masking elements relative to the laser energy beam allows the laser beam to track complicated non-linear profiles accurately which further serves to minimise residual stress formation in multi material processing.

The powder removal system (250) is arranged underneath the build platform (210) and is supplied with a vacuum source (270) for removing un-melted powder from the powder bed (211) through holes in the underside (213) of the build platform (210).

The inert gas supply (260) is configured to supply an inert atmosphere at the powder bed (211) during manufacture of a component.

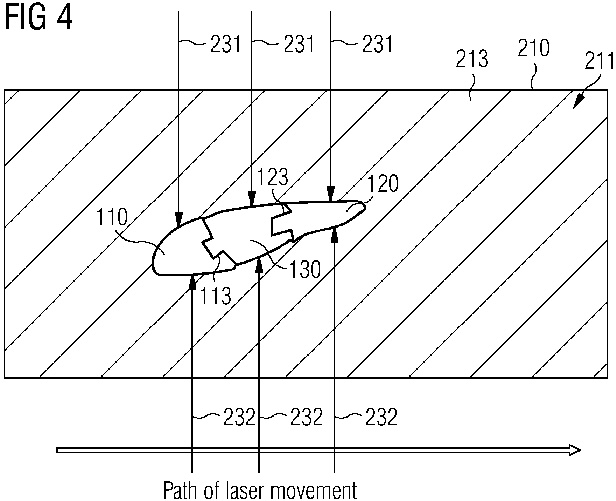

In order to form a component such as an aerofoil (100) by selective laser melting, the following procedure is carried out using the apparatus (200) of Figure 3 and as shown in the schematic of Figure 4.

A first layer of the component is formed by depositing a layer of metal alloy powder from the depositing mechanism (220) onto the build platform (210) to form a powder bed (211). The three powder storage powder vessels (222, 223 and 224) are separately charged with a first, second and third metal alloy powder, respectively, the first, second and third metal alloy powders corresponding to the first, second and third metal alloy compositions of component (100). The depositing mechanism (220) deposits the first metal alloy powder onto an area of the build platform (210) to provide a layer of the first region of the component (110), deposits the second metal alloy powder to provide a layer of the second region of the component (120) and deposits the third metal alloy powder to provide a layer of the third region of the component (130). The depositing mechanism (220) deposits said powders in an arrangement which includes the interlocking profile at the interface of the first, second and third regions (113 and 123), as discussed above. The depositing mechanism (220) may operate to mix the metal alloy powders of adjacent regions at the interfaces (113 and 123) during depositing in order to improve the bonding between said regions. The powder bed (211) includes regions (213) which are not intended to form regions of the component. The laser system (230) then irradiates the metal alloy powders in the first, second and third regions of the layer of the component (100) using multiple laser beams. Six such laser beams (231 and 232) are depicted in Figure 4. The laser system (230) operates to irradiate both the convex (with laser beams 231) and concave (with laser beams 232) sides of the component (100) at the same time so that any thermal distortion produced by irradiating one side before the other is minimised or eliminated. The direction of travel of the laser beams across the powder bed (211) is shown in Figure 4. The metal alloy powder in the regions of the powder bed (213) outside of the component (100) is then removed from the build platform by the powder removal system (250) and recycled to the depositing mechanism (220) for use in the formation of subsequent layers of the component (100). Removing un-melted metal alloy powder in this way may improve the efficiency of the process as less metal alloy powder is needed to fill the powder bed as the component is being formed and also may reduce the residual stress in the component.

The use of multiple laser beams coupled with the masking strategy described earlier also makes it easier to incorporate different laser scanning strategies to minimise residual stress formation. In particular, a helix scanning strategy is used in prior art methods where recursive helix scan paths for the laser are used for each layer so that the bonding strength of multiple layers is increased. The raster scan strategy (also referred to as the alternating scan strategy) alternates the laser beam vector direction after each scan. The progressive scan strategy is a variation of the alternative scan strategy except that the scan vectors are continuous. The island scanning strategy attempts to minimise residual stress formation by discretising the exposure area into smaller islands typically of 5 mm by 5 mm. The islands are typically scanned in a random sequence with shortened scan tracks which minimises localised melting of large sections. In prior art methods it has been possible to implement only one particular scan strategy. However, through the combined use of masking elements and multiple laser beams it is possible to simultaneously implement more than one scan strategy to further minimise residual stress in the formation of multiple material components. For example, it is possible to scan helical patterns within one island scan or use an alternative scan strategy such as a progressive scan strategy in another island. In this manner residual stress can be substantially reduced. The greater the subdivision of the layer into smaller parts or islands may lead to a further reduction in residual stress values.

Subsequent layers of the component (100) are formed by carrying out the steps described above on the previously formed layer of the component (100) until the component (100) is complete. After each layer has been formed, the build platform is lowered using motor (212) by a incremental distance equal to the thickness of one layer of the component.

Once formation of the component (100) is complete, component (100) then undergoes a heat treatment step to improve the ultimate tensile strength of the component. An example of a suitable heat treatment step is as follows:
a) homogenization heat treatment for approximately 10 hours at 1,200 °C;
b) solution treatment at 1,050° C for 1 hour followed by quenching in a salt bath maintained at 150 °C;
c) ageing at approximately 480 °C for around 90 minutes.

The component produced by this method, for example a compressor aerofoil, may have the desired strength in the appropriate regions of the component and may be free from delta ferrite. The elimination of delta ferrite would result in uniform mechanical properties in both longitudinal and transverse directions and prevent tip failures observed in compressor aerofoils of the prior art.

This method may also provide the advantage that the amount of material wastage in the production of such components using prior art methods can be significantly reduced, improving the cost-effectiveness of the process.

A similar selective laser melting process may be used to form other components, for example an aerofoil root. Alternatively, a similar selective laser melting process may be used for the formation of an aerofoil root in combination with the aerofoil described above, to avoid the need to bond these two parts together.

In summary, the present invention provides a component, such as a compressor aerofoil, having different optimised metallic compositions in different regions of the component which may provide improved mechanical properties and improved pitting corrosion resistance and may in particular eliminate the formation of delta ferrite in the component. The component comprises at least two different iron-based compositions in different region of the component, including a first iron-based composition comprising 11.0-15.0 wt% chromium; 1.0-4.0 wt% nickel; 5.0-8.0wt% cobalt; and iron. The first iron-based composition may also comprise comprises 2.0-6.0 wt% copper, 4.0-7.0 wt% molybdenum and one or more of niobium, manganese, silicon, and phosphorous. A selective laser melting method for forming a component and an apparatus for carrying out said method are also provided. The method and apparatus may also be suitable for the production of turbine aerofoils which operate at the hot end (turbine side) of a gas turbine.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, wherein amounts of components in a composition are described in wt%, this means the weight percentage of the specified component in relation to the whole composition referred to. For example, "the first iron-based composition comprises 11.0-15.0 wt% chromium" means that 11.0-15.0 wt% of the first iron-based composition is provided by chromium.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming a component on a build platform, the component comprising a first metal alloy composition in at least a first region of the component and a second metal alloy composition in at least a second region of the component, the method comprising the steps of:
a) forming a layer of the component by depositing a metal alloy powder onto the build platform and irradiating the metal alloy powder using at least two laser beams to melt at least a part of the metal alloy powder, wherein the at least two laser beams are arranged to irradiate opposing sides of the layer of the component;
b) allowing the layer formed in step a) to at least partially solidify;
c) repeating steps a) and b) on the previously formed layer of the component until formation of the component is complete;
d) removing the component from the build platform.

2. The method according to claim 1, wherein in step a) the layer of metal alloy powder is irradiated by the at least two laser beams through a masking system.

3. The method according to claim 2, wherein the masking system is moveable relative to the build platform.

4. The method according to any one of the preceding claims, wherein step a) involves the steps:
i) depositing a first metal alloy powder in a first region of the layer of the component;
ii) depositing a second metal alloy powder in a second region of the layer of the component;
iii) irradiating the first metal alloy powder and the second metal alloy powder deposited in steps i) and ii) using the at least two laser beams, to melt at least a part of the first metal alloy powder and the second metal alloy powder;
wherein the first metal alloy powder forms the first metal alloy composition in the first region of the component and the second metal alloy powder forms the second metal alloy composition in the second region of the component.

5. The method according to claim 4, wherein forming the layer of the component in step a) involves steps of depositing further metal alloy powders in further regions of the layer of the component to provide further metal alloy compositions in further regions of the component.

6. The method according to any one of claims 1 to 4, wherein step c) involves varying the composition of the metal alloy powder used to form the layers of the component to provide the first metal alloy composition in the first region of the component and the second metal alloy composition in the second region of the component.

7. The method according to any one of the preceding claims, wherein the first metal alloy composition is a first iron-based composition comprising:
11.0-15.0 wt% chromium;
1.0-4.0 wt% nickel;
5.0-8.0 wt% cobalt;
optionally one or more of niobium, manganese, silicon, and phosphorous; and iron.

8. The method according to any one of the preceding claims, wherein the second metal alloy composition is a second iron-based composition comprising:
14.0-18.0 wt% chromium;
4.0-6.0 wt% nickel;
0.5-2.0 wt% cobalt;
optionally one of more of manganese, silicon, and phosphorous; and
iron to balance.

9. An apparatus for forming a metal alloy component, the apparatus comprising:
a build platform;
a depositing mechanism arranged to deposit metal alloy powder onto the build platform;
a laser system adapted to produce at least two laser beams.

10. The apparatus of claim 9, wherein the at least two laser beams are arranged to irradiate opposite sides of said metal alloy component on the build platform.

11. The apparatus of claim 10 comprising a masking system arranged between the laser system and the build platform for selectively allowing or preventing said at least two laser beams from irradiating said metal alloy component on the build platform.

12. A component comprising a first iron-based composition in at least a first region of the component, the first iron-based composition comprising:
11.0-15.0 wt% chromium;
1.0-4.0 wt% nickel;
5.0-8.0 wt% cobalt; and
iron.

13. The component according to claim 12, wherein the first iron-based composition comprises 4.0-7.0 wt% molybdenum.

14. The component according to claim 12 or claim 13, comprising a second iron-based composition in a second region of the component, the second iron-based composition comprising:
14.0-18.0 wt% chromium;
4.0-6.0 wt% nickel;
0.5-2.0 wt% cobalt;
optionally one of more of manganese, silicon, and phosphorous; and
iron.

15. The component according to any one of claims 12 to 14, comprising a third iron-based composition in a third region of the component, the third iron-based composition comprising:
14.0-18.0 wt% chromium;
2.0-4.0 wt% nickel;
1.0-4.0 wt% cobalt;
optionally one or more of niobium, manganese, silicon, and phosphorous; and
iron.
